# FASCICULE DE BREVET EUROPEEN

(11) **EP 1 289 633 B1**
(45) Date de publication et mention de la délivrance du brevet: **26.10.2011**
(21) Numéro de dépôt: 01945444.6
(22) Date de dépôt: 14.06.2001
(51) Int. Cl.: B01D 65/08, B01D 63/06, B01D 29/25

(54) **DISPOSITIF DE FILTRATION INTEGRANT UNE BOUCLE DE CIRCULATION**
FILTERVORRICHTUNG MIT INTEGRIERTEM KREISLAUFSYSTEM
FILTERING DEVICE INCORPORATING A CIRCULATION LOOP

(30) Priorité: 14.06.2000 FR 0007551
(43) Date de publication de la demande: 12.03.2003
(73) Titulaire: Societé Industrielle de la Vallée de L' Aigues S.I.V.A., 26110 Nyons (FR)
(72) Inventeur: GRANGEON, André, F-84600 Valreas (FR); LESCOCHE, Philippe, F-84110 Faucon (FR)
(74) Mandataire: Thibault, Jean-Marc
(86) Numéro de dépôt international: PCT/FR2001/001864
(87) Numéro de publication internationale: WO 2001/096003

(56) Documents cités:
- EP-A- 0 217 568
- EP-A- 0 448 466
- WO-A-98/36824
- WO-A-98/57732
- DE-A- 3 323 725
- US-A- 3 369 667
- US-A- 3 893 920
- US-A- 4 239 624
- US-A- 4 702 842
- PATENT ABSTRACTS OF JAPAN vol. 1998, no. 09, 31 juillet 1998 (1998-07-31) -& JP 10 109022 A (TOSHIBA CERAMICS CO LTD), 28 avril 1998 (1998-04-28) -& DATABASE WPI Derwent Publications Ltd., London, GB; AN 1998-305274 XP002181858 & JP 10 109022 A

## Description

La présente invention concerne le domaine technique de la séparation moléculaire ou particulaire mettant en oeuvre des éléments de séparation appelés généralement membranes, adaptés pour assurer la séparation des molécules ou des particules contenues dans un milieu fluide à traiter.

L'objet de l'invention trouve une application particulièrement avantageuse dans le domaine de la filtration au sens général d'un milieu fluide à traiter, et en particulier de la nanofiltration, de l'ultrafiltration, de la microfiltration, etc.

Dans l'état de la technique, il est connu de nombreuses variantes de réalisation d'une installation de filtration pour un fluide à traiter. Par exemple, une installation de filtration comporte au moins un et généralement deux dispositifs de filtration comportant chacun dans une enveloppe, une série d'éléments de filtration de forme tubulaire s'étendant parallèlement les uns aux autres, et montés de manière étanche à chacune de leurs extrémités sur une plaque de positionnement. Chaque élément de filtration comporte au moins un canal de circulation pour le fluide à traiter. Les éléments de filtration assurent la filtration tangentielle du fluide, en vue d'obtenir à la surface périphérique des éléments de filtration, la sortie du filtrat destiné à être récupéré dans un volume de collecte situé entre les plaques de positionnement et l'enveloppe.

Les deux dispositifs de filtration sont montés en série à l'intérieur d'une boucle de circulation dans laquelle une pompe de circulation est reliée aux dispositifs de filtration par l'intermédiaire d'une canalisation d'amenée du fluide à traiter et d'une canalisation de retour récupérant le fluide ayant circulé à l'intérieur des éléments de filtration et appelé rétentat. La pompe de circulation permet d'assurer la circulation du fluide à traiter à grande vitesse à l'intérieur des éléments de filtration tendant à générer une contrainte de cisaillement qui redisperse les matières déposées sur la surface des canaux de la membrane.

Il doit être considéré que ce principe de décolmatage est réalisé à l'intérieur d'une boucle de circulation qui comprend deux dispositifs de filtration montés en série et les canalisations d'amenée et de retour du fluide à traiter. Cette installation donne satisfaction au niveau du traitement du fluide. Toutefois, une telle installation présente un coût de fabrication relativement important compte tenu de la réalisation d'une boucle de circulation nécessitant la mise en oeuvre de diverses canalisations et raccords. De plus, une telle installation présente un encombrement relativement important.

Pour tenter de remédier à ces inconvénients, la demande de brevet EP 0 217 568 propose un dispositif de filtration comportant, dans un carter, une série d'éléments de filtration de forme tubulaire s'étendant parallèlement les uns aux autres en traversant, de manière étanche, à chacune de leurs extrémités une plaque de positionnement. Les éléments de filtration comportent chacun au moins un canal de circulation pour le fluide à traiter et assurent la filtration dudit fluide en vue d'obtenir, à la surface périphérique des éléments de filtration, la sortie du filtrat destiné à être récupéré dans un volume de collecte situé entre les plaques de positionnement et le carter. L'une des extrémités des éléments de filtration débouche dans une chambre de communication qui assure la communication entre un circuit aller et un circuit retour pour le fluide à traiter circulant dans deux séries distinctes d'éléments de filtration. Cette boucle de circulation intégrée est reliée extérieurement à une pompe de circulation pour le fluide à traiter. Un tel dispositif nécessite ainsi un raccordement avec une pompe de circulation extérieure, ce qui augmente son coût de fabrication et son encombrement.

Par ailleurs, il est connu par le document WO 98/57732 un dispositif de filtration divisé longitudinalement pour présenter une première série de plaques de filtration traversées par le liquide à traiter selon un premier sens de circulation, et une deuxième série de plaques de filtration traversées par le liquide à traiter sortant de la première série de plaques et selon un deuxième sens opposé du premier. Une pompe de circulation montée à l'intérieur du dispositif assure la circulation du fluide à traiter entre la première et la deuxième série de plaques.

Le brevet US 4 702 842 et la demande de brevet EP 0 448 466 décrivent un dispositif de filtration comportant une série d'éléments de filtration montés dans un carter pour être traversés par un fluide à traiter dont le circuit de retour est un chemin parallèle aux éléments de filtration. Dans le brevet US 4 702 842, les éléments de filtration débouchent dans une chambre d'aspiration délimitée par une pièce de séparation et dans laquelle est montée une turbine d'une pompe de circulation. Cette chambre d'aspiration communique avec une chambre de refoulement située à l'extérieur de la pièce de séparation et communiquent avec le circuit de retour du fluide à traiter.

L'objet de l'invention vise donc à remédier aux inconvénients de la technique antérieure en proposant un dispositif pour la filtration tangentielle d'un fluide à traiter, conçu pour présenter un coût de fabrication réduit et un encombrement limité, tout en conservant un débit de filtration important.

Pour atteindre un tel objectif, l'objet de l'invention concerne un dispositif pour la filtration tangentielle d'un fluide à traiter conforme à la revendication 1.

Diverses autres caractéristiques ressortent de la description faite ci-dessous en référence aux dessins annexés qui montrent, à titre d'exemples non limitatifs, des formes de réalisation et de mise en oeuvre de l'objet de invention.
La **fig. 1** est une vue en coupe longitudinale d'un exemple de réalisation d'un dispositif auquel s'applique l'invention.
La **fig. 2** est une vue en coupe transversale prise sensiblement selon les lignes II-II de la **fig.1**.
La **fig. 3** est une vue en coupe-élévation partielle d'un premier exemple de réalisation d'un dispositif conforme à l'invention.
La **fig. 4** est une vue de dessous du dispositif illustré à la **fig. 3****.**

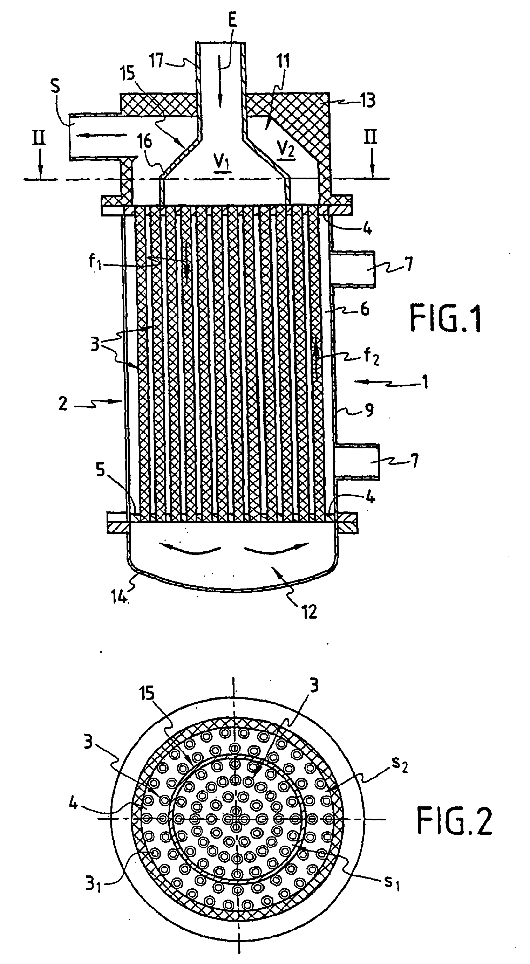

Les **fig. 1** et **2** illustrent un dispositif ou module **1** assurant la filtration tangentielle pour un fluide à traiter pouvant être de toute nature. Le dispositif **1** comporte, dans un carter **2,** une série d'éléments de filtration **3** de forme tubulaire s'étendant parallèlement les uns aux autres. Chaque élément de filtration **3** possède une forme extérieure de section droite transversale, par exemple hexagonale ou circulaire. Chaque élément de filtration **3** comporte au moins un canal **3₁** réalisé parallèlement à l'axe longitudinal de l'élément de filtration. La surface des canaux **3₁** est recouverte par au moins une couche séparatrice non représentée, destinée à être en contact avec le milieu fluide à traiter circulant à l'intérieur des canaux. La nature de la ou des couches séparatrices est choisie en fonction du pouvoir de séparation ou de filtration à obtenir.

Les éléments de filtration **3** sont montés à chacune de leurs extrémités, sur une plaque de positionnement **4** montée à l'intérieur du carter **2.** De manière classique, chaque plaque de positionnement **4** comporte un trou **5** permettant le passage de l'extrémité d'un élément de filtration tubulaire **3.** Chaque trou **5** est équipé d'un joint d'étanchéité permettant d'assurer un montage étanche des éléments de filtration **3** sur les plaques de positionnement **4.** Les plaques de positionnement **4** définissent entre elles et avec le carter **2,** un volume de collecte **6** pour le filtrat sortant de la surface périphérique des éléments de filtration **3.** Ce volume de collecte **6** communique par au moins une et, dans l'exemple illustré, deux sorties **7** d'évacuation du filtrat. Dans l'exemple illustré, chaque sortie **7** pour le filtrat est constituée par un tronçon de canalisation raccordé sur une virole **9** constituant en partie, le carter **2,** et à chaque extrémité de laquelle sont montées les plaques de positionnement **4.** La virole **9** délimite ainsi avec les plaques de positionnement **4,** le volume de collecte **6.**

Le dispositif de filtration **1** comporte également une première chambre de communication **11** aménagée dans le carter **2** et dans laquelle débouche, au-delà de la plaque de positionnement **4,** l'une des extrémités des éléments de filtration **3,** tandis que l'autre extrémité des éléments de filtration **3** débouche au-delà de l'autre plaque de filtration **4,** dans une deuxième chambre de communication **12.** Tel que cela apparaît plus précisément à la **fig. 1****,** la première chambre **11** est délimitée à l'intérieur d'un boîtier de fermeture **13** raccordé à la virole **9,** tandis que la deuxième chambre de communication **12** est délimitée entre la plaque de positionnement voisine **4** et un fond de fermeture **14** monté sur la virole **9** et/ou la plaque de positionnement **4.** Ainsi, le carter **2** est constitué par la virole **9,** le boîtier de fermeture **13** et le fond de fermeture **14.**

Dans l'exemple illustré, le dispositif **1** comporte une pièce de séparation **15** montée dans la première chambre de communication **11** afin de diviser cette première chambre en un premier volume **V₁** permettant d'alimenter en fluide à traiter, une première série **s₁** d'éléments de filtration **3,** selon un premier sens représenté par la flèche **f₁** et en un deuxième volume **V₂** assurant la récupération du fluide à traiter ayant circulé selon un deuxième sens **f₂** contraire au premier sens **f₁,** et dans une seconde série **s₂** d'éléments de filtration **3.** Ainsi, par exemple, la pièce de séparation **15** est montée de manière étanche sur la plaque de positionnement **4** voisine, de manière à diviser le volume de la première chambre **11** en un premier volume **V₁** et en deuxième volume **V₂,** situés, respectivement, à l'intérieur et à l'extérieur de la pièce de séparation dans l'exemple illustré. Il doit être compris que les éléments de filtration **3** appartenant à la première série sont différents des éléments de filtration **3** de la seconde série **s₂.** Selon une caractéristique préférée de réalisation, la pièce de séparation **15** est montée de manière que les séries **s₁, s₂** des éléments de filtration **3** comportent un nombre sensiblement égal d'éléments de filtration **3.** Dans l'exemple illustré, le nombre d'éléments de filtration **3** est de 108 répartis en six couronnes. Tel que cela ressort plus précisément de la **fig. 2****,** chaque série **s₁, s₂** comporte chacune 54 éléments de filtration **3.** Selon cet exemple, les éléments de filtration **3** appartenant à la première série **s₁** sont situés à l'intérieur de l'enveloppe virtuelle prolongeant la pièce de séparation **15,** tandis que les éléments de filtration **3** appartenant à la deuxième série **s₂** sont situés à l'extérieur de cette enveloppe virtuelle.

Dans l'exemple illustré à la **fig.1****,** la pièce de séparation **15** présente la forme d'un entonnoir formé d'un vase **16** de montage sur la plaque de positionnement voisine **4.** Le vase de montage **16** est prolongé par un tube **17** traversant de manière étanche, le boîtier de fermeture **13.** Le tube **17** de la pièce de séparation **15** est relié dans l'exemple illustré, à une pompe de circulation non représentée permettant d'assurer l'amenée du fluide à traiter à l'intérieur du premier volume **V₁** de manière à assurer la circulation du fluide à traiter à l'intérieur des éléments de filtration **3** de la première série **s₁** dans le sens **f₁.** Le tube **17** sert ainsi d'entrée **E** pour le fluide à traiter. Le deuxième volume **V₂** de la première chambre de communication **11,** communique avec une sortie **S** d'évacuation du rétentat destiné à être relié au retour d'aspiration de la pompe de circulation.

Le fonctionnement du dispositif de filtration **1** décrit ci-dessus découle directement de la description qui précède.

Le fluide à traiter qui sort de la pompe de circulation est amené dans le premier volume **V₁,** c'est-à-dire à l'intérieur de la pièce de séparation **15.** Le fluide à traiter pénètre à l'intérieur des canaux **3₁** des éléments de filtration **3** de la première série **s₁**. Le fluide à traiter circule ainsi selon le premier sens **f₁** dans les éléments tubulaires **3** de la première série et débouche dans la deuxième chambre de communication **12.** Il est à noter qu'une partie du fluide à traiter est divisée en une partie sortant à la surface périphérique des éléments de filtration **3** sous la forme d'un filtrat récupéré par le volume de collecte **6.** Le fluide à traiter récupéré dans la deuxième chambre de communication **12** se trouve amené à circuler dans les éléments de filtration **3** de la deuxième série **s₂,** compte tenu du fait que le deuxième volume **V₂** communique avec l'aspiration de la pompe de circulation. Le fluide à traiter circule ainsi dans les éléments de filtration **3** de la deuxième série **s₂,** selon un deuxième sens **f₂** contraire au premier sens **f₁.** Pendant ce trajet retour, le filtrat sortant de la surface périphérique des éléments de filtration **3** de la deuxième série **s₂** est récupéré dans le volume de collecte **6.**

Un tel dispositif **1** comporte ainsi une boucle intégrée de circulation pour le fluide à traiter permettant de réduire les tubulures de raccordement par rapport à une installation mettant en oeuvre deux modules de filtration montés en série. Le fluide à traiter circule ainsi selon un trajet ou un circuit considéré aller dans le premier sens **f₁** et un circuit retour selon le deuxième sens **f₂.** Dans l'exemple considéré, les éléments de filtration **3** placés à l'intérieur de l'enveloppe virtuelle prolongeant la pièce de séparation **15,** assurent la circulation du fluide selon le premier sens, tandis que les éléments de filtration montés à l'extérieur de l'enveloppe virtuelle prolongeant la pièce de séparation **15,** assurent la circulation dans le deuxième sens **f₂.** Bien entendu, il pourrait être envisagé d'intervertir la circulation du fluide à traiter dans les première et deuxième séries d'éléments de filtration en raccordant la sortie de refoulement de la pompe directement sur la sortie **S**, tandis que le tube **17** de la pièce de séparation **15** serait raccordé à l'aspiration de la pompe de circulation.

Il est à noter que la séparation des éléments de filtration en deux séries **s₁, s₂** comportant un nombre identique d'éléments **3** conduit à l'obtention d'un même débit de circulation dans chaque élément de filtration **3.** La vitesse de circulation qui est le paramètre prépondérant du décolmatage tangentiel, possède donc la même valeur dans chaque élément de filtration **3.**

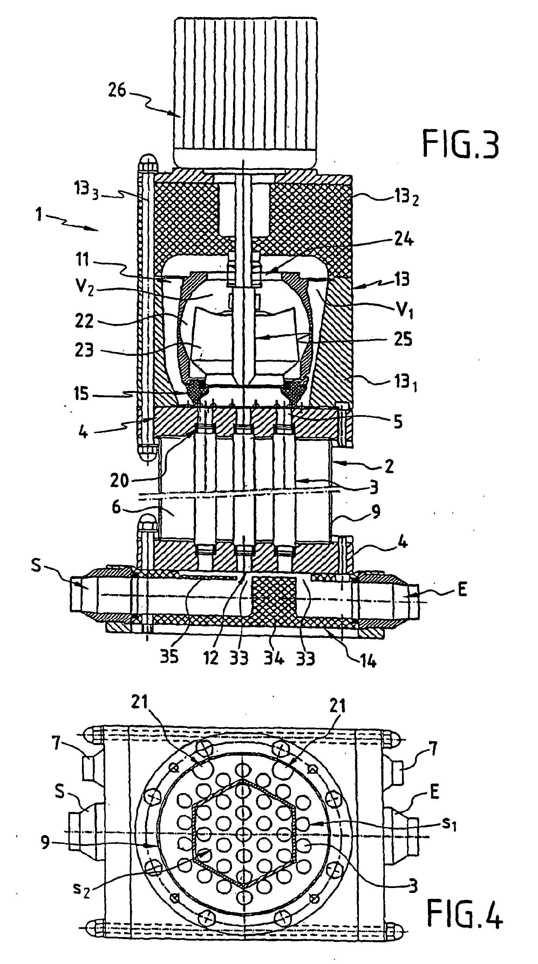

Conformément à l'invention, le dispositif de filtration **1** dont le principe est décrit ci-dessus est adapté de manière à intégrer une pompe de circulation. Les **fig. 3** et **4** illustrent une première variante de réalisation d'un dispositif de filtration **1** conforme à l'invention, disposé de préférence verticalement, comme montré sur les dessins. Par souci de simplification, les éléments identiques à ceux décrits en relation des **fig. 1** et **2** portent la même référence. Selon cet exemple de réalisation, le dispositif **1** comporte également, dans un carter **2,** une série d'éléments de filtration **3** montés à chacune de leurs extrémités, de manière étanche à l'aide d'un joint **20** sur une plaque de positionnement **4.** Le volume de collecte **6** du filtrat est délimité par l'intermédiaire de la virole **9** raccordée de manière étanche, sur les plaques de positionnement **4.** Dans cet exemple de réalisation, le volume de collecte **6** est relié à deux sorties de perméat **7** réalisées sur le fond de fermeture **14.** A cet effet, le fond de fermeture **14** comporte par exemple, deux orifices de passage **21** communiquant, d'une part, avec les sorties du filtrat **7,** par l'intermédiaire d'un canal non représenté aménagé dans le fond de fermeture **14** et, d'autre part, avec des orifices non représentés aménagés dans la plaque de positionnement voisine **4** et débouchant dans le volume de collecte **6.** De cette manière, la réalisation de la virole **9** qui ne comporte pas les sorties **7,** est simplifiée.

Dans cet exemple de réalisation, la pièce de séparation **15** délimite intérieurement un logement **22** pour une turbine **23** d'une pompe de circulation. Dans cet exemple, la pièce de séparation **15** se présente sous la forme d'une noix montée de manière étanche sur la plaque de positionnement voisine **4.** La pièce de séparation **15** délimite intérieurement le deuxième volume **V₂** et extérieurement par rapport au boîtier de fermeture **13,** le premier volume **V₁.** Le boîtier de fermeture **13** peut être réalisé en deux parties **13₁, 13₂** fixées entre elles et à la plaque de positionnement **4** par l'intermédiaire de moyens d'assemblage **13₃.** Un passage de communication **24** aménagé sur la pièce séparatrice **15** assure le passage du fluide à traiter entre les volumes **V₁, V₂.** La turbine **23** comporte un axe d'entraînement **25** relié à un moteur d'entraînement en rotation **26** monté sur la partie **13₂** du boîtier de fermeture **13.** De préférence, l'axe d'entraînement **25** est monté dans l'alignement de l'axe de la virole **9** dans laquelle les éléments de filtration **3** sont répartis régulièrement suivant l'axe de la virole. Bien entendu, le boîtier de fermeture **13** comporte un passage étanche pour l'arbre d'entraînement **25.**

Comme expliqué dans l'exemple illustré aux **fig. 1** et **2****,** le premier volume **V₁** permet d'alimenter en fluide à traiter, comme cela sera expliqué dans la suite de la description, une première série **s₁** d'éléments de filtration **3** selon un premier sens, tandis que le deuxième volume **V₂** assure la récupération du fluide à traiter ayant circulé selon un deuxième sens contraire au premier sens, dans une seconde série **s₂** d'éléments de filtration différents des éléments de filtration **3** de la première série **s₁**. Il est à noter que dans cet, exemple de réalisation, les éléments de filtration **3** appartenant à la première série **s₁** sont situés à l'extérieur de l'enveloppe virtuelle prolongeant la pièce de séparation **15,** tandis que les éléments de filtration **3** appartenant à la deuxième série **s₂** sont situés à l'intérieur de l'enveloppe virtuelle prolongeant la pièce de séparation **15.** Par exemple, le nombre d'éléments de filtration **3** des première et deuxième séries **s₁, s₂** est respectivement égal à 18 et 19.

Selon une autre caractéristique avantageuse, la deuxième chambre de communication **12** est aménagée dans le fond de fermeture **14** qui est équipé de l'entrée **E** pour le fluide à traiter, de la sortie **S** d'évacuation du rétentat et, comme indiqué ci-dessus, des sorties perméat **7.** La deuxième chambre de communication **12** est délimitée, par la plaque de positionnement **4** voisine et assure l'alimentation en fluide à traiter, des éléments de filtration **3** de la deuxième série **s₂** et la récupération du fluide à traiter ayant circulé dans les éléments de filtration **3** de la première série **s₁.** Cette deuxième chambre de communication **12** est reliée à l'entrée **E** pour le fluide à traiter et à la sortie **S** d'évacuation du rétentat par l'intermédiaire de passages de circulation **33.**

Dans l'exemple illustré, le fond de fermeture **14** comporte une conformation massive **34** permettant de séparer l'entrée **E** de la sortie **S** et de délimiter en partie, la chambre **12** qui est délimitée également par un prolongement **35.** Selon une variante simplifiée de réalisation, la conformation **34** peut être supprimée, ainsi qu'éventuellement le prolongement **35.** Dans cette forme de réalisation, la chambre de communication **12** occupe la majeure partie du volume interne du fond de fermeture **14.**

Le fonctionnement du dispositif **1** décrit aux **fig. 3** et **4** découle directement de la description qui précède. Le fluide à traiter arrive par l'entrée **E** et se trouve aspiré sous l'effet du fonctionnement de la turbine **23** dans les éléments de filtration **3** de la deuxième série **s₂,** en ayant, au préalable, passé dans la deuxième chambre de communication **12.** Le fluide remonte ainsi dans les éléments de filtration **3** de la deuxième série **s₂** qui formemnt ainsi le circuit aller de la boucle de circulation pour déboucher dans le deuxième volume **V₂** de la première chambre **11.** Après avoir traversé le volume de la turbine **23,** le fluide à traiter passe à travers le passage de communication **24** pour entrer dans le premier volume **V₁** dé manière à être dirigé à travers les éléments de filtration **3** de la première série **s₁** qui forment le circuit retour de la boucle de circulation. Le fluide ayant circulé à travers les éléments de filtration **3** de la première série **s₁** est récupéré dans la deuxième chambre de communication **12** pour ensuite être distribué, d'une part, dans les éléments de filtration **3** de la deuxième série **s₂** et, d'autre part, dans la sortie **S** d'évacuation du rétentat.

Le fonctionnement du dispositif **1** est donc identique au fonctionnement du dispositif décrit aux **fig. 1** et **2****.** Un tel dispositif intègre également une boucle de circulation pour le fluide à traiter mais aussi la pompe de circulation, ce qui permet de réduire encore la mise en oeuvre de canalisations. De préférence, le fond de fermeture **14,** le boîtier de fermeture **13,** les plaques de positionnement **4,** la pièce de séparation **15** et la virole **9** sont réalisés en matière plastique, injectée ou moulée, et de préférence incorporant des fibres de renforcement.

Dans l'exemple qui précède, la pompe aspire à travers les éléments de filtration de la deuxième série **s₂** et rejette à travers les éléments de filtration de la première série **s₁.** Bien entendu, par inversion du sens de rotation de la tubulure, il peut être prévu d'aspirer à travers les éléments de filtration **3** de la première série **s₁** et de rejeter à travers les éléments de filtration **3** de la deuxième série **s₂.**

## Revendications

1. Dispositif pour la filtration tangentielle d'un fluide à traiter destiné à être réparti en un filtrat et en un rétentat, le dispositif comportant dans un carter **(2) :**
- au moins une entrée **(E)** pour le fluide à traiter,
- au moins une sortie **(S)** d'évacuation du rétentat,
- une série d'éléments de filtration **(3)** s'étendant parallèlement les uns aux autres en traversant de manière étanche, à chacune de leurs extrémités, une plaque de positionnement **(4),** les éléments de filtration **(3)** comportant chacun au moins un canal **(3₁)** de circulation pour le fluide à traiter et assurant la filtration dudit fluide, en vue d'obtenir à la surface périphérique des éléments de filtration, la sortie du filtrat destiné à être récupéré dans un volume de collecte **(6)** situé entre les plaques de positionnement **(4)** et le carter **(2),**
- au moins une sortie **(7)** pour le filtrat communiquant avec le volume de collecte **(6)** du filtrat,
- une première chambre de communication **(11)** dans laquelle débouche l'une des extrémités des éléments de filtration tandis que l'autre des extremités des éléments de filtration débouche dans une deuxième chambe de communication (12),
- une pièce de séparation **(15) :**
• montée dans la première chambre de communication **(11),** en contact étanche avec la plaque de positionnement **(4)** voisine, pour diviser ladite chambre en des premier **(V₁)** et deuxième **(V₂)** volumes délimités extérieurement et intérieurement par la pièce de séparation
• comportant un passage de communication **(24)** entre le premier volume **(V₁)** et le deuxième volume **(V₂),**
• équipée intérieurement d'une turbine **(23)** d'une pompe de circulation, munie d'un axe d'entraînement **(25)** s'étendant à l'extérieur de la première chambre **(11)** pour être reliée à un moteur d'entraînement **(26),**
- et un boîtier de fermeture **(13)** fixé de manière étanche, délimitant la première chambre de communication **(11)** et traversé, de manière, étanche, par l'axe d'entraînement **(25)** de la turbine **(23),**
**caractérisé en ce que** les éléments de filtration **(3)** sont des éléments de forme tubulaire répartis en une première série **(s₁)** et en une deuxième série **(s₂)** comportant un nombre sensiblement égal d'éléments de filtration **(3),** les première et deuxième séries **(s₁, s₂)** étant alimentées en fluide à traiter selon respectivement des sens contraires pour former un circuit aller et un circuit retour, la pièce de séparation **(15)** est tubulaire et montée de manière que d'une part, le premier volume **(v₁)** communique avec les éléments de filtration **(3)** de l'une des séries **(s₁, s₂)** situés à l'extérieur de l'enveloppe virtuelle prolongeant la paroi de séparation **(15)** et que d'autre part, le deuxième volume **(v₂)** communique avec les éléments de filtration **(3)** de l'autre des séries **(s₁, s₂)** situés à l'intérieur de ladite enveloppe virtuelle.

2. Dispositif selon la revendication 1, **caractérisé en ce que** l'axe d'entraînement (25) est monté dans l'alignement de l'axe de la virole **(9)** et **en ce que** le moteur d'entraînement **(26)** est supporté par le boîtier de fermeture **(13).**

3. Dispositif selon la revendication 1, **caractérisé en ce que** la deuxième chambre de communication **(12)** est délimitée entre un fond de fermeture **(14)** et la plaque de positionnement ne délimitant pas la première chambre de communication **(11),** cette deuxième chambre (12) assurant l'alimentation en fluide du circuit aller et la récupération du fluide à traiter ayant circulé dans le circuit retour.

4. Dispositif selon la revendication 3, **caractérisé en ce que** le fond de fermeture **(14)** qui délimite la deuxième chambre de communication **(12),** est équipé :
- de l'entrée **(E)** pour le fluide à traiter,
- de la sortie **(S)** d'évacuation du rétentat,
- et d'une sortie **(7)** pour le filtrat communiquant avec le volume de collecte **(6)** du filtrat par l'intermédiaire d'orifices aménagés dans la plaque de positionnement voisine **(4)** et dans le fond de fermeture **(14).**

5. Dispositif selon la revendication 1 ou 4, **caractérisé en ce que** les plaques de positionnement **(4)** sont reliées entre elles par l'intermédiaire d'une virole **(9)** délimitant le volume de collecte **(6)** du filtrat.

6. Dispositif selon la revendication 4, **caractérisé en ce que** le fond de fermeture **(14),** le boîtier de fermeture **(13),** les plaques de positionnement **(4),** la pièce de séparation **(15)** et la virole **(9)** sont réalisés en matière plastique.

## Claims

1. Device for tangential filtering of a fluid to be treated designed to be separated into a filtrate and a retentate, the device comprising within a housing (2):
- at least one inlet (E) for the fluid to be treated;
- at least one outlet (S) for evacuation of the retentate;
- a series of filtering elements (3) extending parallel to each other and sealingly penetrating a positioning plate (4) at each of their ends, the filtering elements (3) each comprising at least one circulation channel (3₁) for the fluid to be treated and providing filtering of said fluid, so as to obtain egress of the filtrate at the peripheral surface of the filtering elements, to be recovered in a collection volume (6) located between the positioning plates (4) and the housing (2);
- at least one outlet (7) for the filtrate communicating with the filtrate collection volume (6);
- a first communicating chamber (11) into which opens out one end of the filtering elements while the other end of the filtering elements opens out into a second communicating chamber (12); and
- a separating part (15):
• mounted in the first communicating chamber (11), in sealed contact with the neighboring positioning plate (4), to divide said chamber into a first (V₁) and second (V₂) volume delimited externally and internally by the separating part;
• comprising a communication passage (24) between the first volume (V₁) and the second volume (V₂);
• equipped internally with a turbine (23) of a circulating pump, fitted with a driving shaft (25) extending outside the first chamber (11) for connection to a driving motor (26); and
- a closure housing (13) that is sealed and that delimits the first communicating chamber (11), and that is sealingly traversed by the driving shaft (25) of the turbine (23),
the device being **characterized in that** the filtering elements (3) are of tubular shape and are divided into a first series (s₁) and into a second series (s₂) having a more or less equal number of filtering elements (3),
the first and second series (s₁, s₂) being fed with fluid to be treated in respective opposite directions so as to form a return circuit and an outgoing circuit, the separating part (15) is tubular and is mounted in such a way that, on the one hand, the first volume (v₁) communicates with the filtering elements (3) of one of the series (s₁, s₂) located outside the virtual envelope extending the separating part (15) and on the other hand, the second volume (v₂) communicates with the filtering elements (3) of the other one of the series (s₁, s₂) located inside said virtual envelope.

2. Device according to claim 1, **characterized in that** the driving shaft (25) is mounted in the alignment of the axis of the collar (9) and **in that** the driving motor (26) is supported by the closure housing (13).

3. Device according to claim 1, **characterized in that** the second communicating chamber (12) is delimited between a sealing cap (14) and the positioning plate that does not delimit the first communicating chamber (11), said second chamber (12) providing fluid feed to the outgoing circuit and recovery of the fluid to be treated after it has circulated in the return circuit.

4. Device according to claim 3, **characterized in that** the sealing cap (14) which delimits the second communicating chamber (12), is fitted:
- with inlet (E) for the fluid to be treated;
- with outlet (5) for evacuation of the retentate; and
- with an outlet (7) for the filtrate communicating with the filtrate collection volume (6) by means of orifices in the neighboring positioning plate (4) and in the sealing cap (14).

5. Device according to claim 1 or claim 4, **characterized in that** the positioning plates (4) are connected between themselves by means of a collar (9) delimiting the filtrate collection volume (6).

6. Device according to claim 4, **characterized in that** the sealing cap (14), the closure housing (13), the positioning plates (4), the separating part (15) and the collar (9) are fabricated of plastic.

## Patentansprüche

1. Vorrichtung für die Tangentialfiltration eines zu behandelnden Fluids, welches dazu bestimmt ist, in ein Filtrat und in ein Retentat aufgeteilt zu werden, wobei die Vorrichtung in einem Gehäuse (2) umfaßt:
- wenigstens einen Einlaß (E) für das zu behandelnde Fluid,
- wenigstens einen Auslaß (S) zum Ableiten des Retentats,
- eine Reihe von Filterelementen (3), die parallel zueinander verlaufen und dabei an jedem ihrer Enden eine Positionierungsplatte (4) dicht durchgreifen, wobei die Filterelemente (3) jeweils wenigstens einen Zirkulationskanal (3₁) für das zu behandelnde Fluid umfassen und die Filtration des Fluids sicherstellen, um an der Umfangsfläche der Filterelemente das Austreten des Filtrats zu erreichen, das dazu bestimmt ist, in einem Sammelraum (6), welcher zwischen den Positionierungsplatten (4) und dem Gehäuse (2) gelegen ist, aufgefangen zu werden,
- wenigstens einen Auslaß (7) für das Filtrat, der mit dem Sammelraum (6) für das Filtrat in Verbindung steht,
- eine erste Verbindungskammer (11), in die das eine der Enden der Filterelemente mündet, während das andere der Enden der Filterelemente in eine zweite Verbindungskammer (12) mündet,
- ein Trennteil (15), das:
- in der ersten Verbindungskammer (11) in dichtem Kontakt mit der benachbarten Positionierungsplatte (4) angebracht ist, um die Kammer in einen ersten Raum (V₁) und einen zweiten Raum (V₂) zu unterteilen, die außen und innen durch das Trennteil begrenzt sind,
- einen Verbindungsdurchgang (24) zwischen dem ersten Raum (V₁) und dem zweiten Raum (V₂) umfaßt,
- innen mit einer Turbine (23) einer Umwälzpumpe ausgestattet ist, die mit einer Antriebsachse (25) versehen ist, welche außerhalb der ersten Kammer (11) verläuft, um mit einem Antriebsmotor (26) verbunden zu werden,
- und ein Verschlußgehäuse (13), das dicht befestigt ist, die erste Verbindungskammer (11) begrenzt und von der Antriebsachse (25) der Turbine (23) dicht durchgriffen ist,
**dadurch gekennzeichnet, daß** die Filterelemente (3) röhrenförmige Elemente sind, die in eine erste Gruppe (s₁) und in eine zweite Gruppe (s₂), welche eine im wesentlichen gleiche Anzahl von Filterelementen (3) umfassen, aufgeteilt sind, wobei die erste und die zweite Gruppe (s₁, s₂) in jeweils entgegengesetzten Richtungen mit zu behandelndem Fluid beaufschlagt werden, um einen Hinkreis und einen Rückkreis zu bilden, wobei das Trennteil (15) röhrenförmig und derart angebracht ist, daß einerseits der erste Raum (V₁) mit den außerhalb der die Trennwand (15) fortsetzenden virtuellen Hülle gelegenen Filterelementen (3) von einer der Gruppen (s₁, s₂) in Verbindung steht und daß andererseits der zweite Raum (V₂) mit den innerhalb der virtuellen Hülle befindlichen Filterelementen (3) der anderen der Gruppen (s₁, s₂) in Verbindung steht.

2. Vorrichtung nach Anspruch 1, **dadurch gekennzeichnet, daß** die Antriebsachse (25) in der Flucht der Achse des Mantels (9) angebracht ist und daß der Antriebsmotor (26) von dem Verschlußgehäuse (13) getragen wird.

3. Vorrichtung nach Anspruch 1, **dadurch gekennzeichnet, daß** die zweite Verbindungskammer (12) zwischen einem Verschlußboden (14) und der Positionierungsplatte, welche nicht die erste Verbindungskammer (11) begrenzt, begrenzt ist, wobei diese zweite Kammer (12) die Beaufschlagung des Hinkreises mit Fluid sowie das Auffangen des zu behandelnden Fluids, das in dem Rückkreis zirkuliert ist, sicherstellt.

4. Vorrichtung nach Anspruch 3, **dadurch gekennzeichnet, daß** der Verschlußboden (14), der die zweite Verbindungskammer (12) begrenzt, ausgestattet ist mit:
- dem Einlaß (E) für das zu behandelnde Fluid,
- dem Auslaß (S) zum Ableiten des Retentats, und
- einem Auslaß (7) für das Filtrat, der über Öffnungen, die in der benachbarten Positionierungsplatte (4) und in dem Verschlußboden (14) ausgebildet sind, mit dem Sammelraum (6) für das Filtrat in Verbindung steht.

5. Vorrichtung nach Anspruch 1 oder 4, **dadurch gekennzeichnet, daß** die Positionierungsplatten (4) durch einen Mantel (9), der den Sammelraum (6) für das Filtrat begrenzt, untereinander verbunden sind.

6. Vorrichtung nach Anspruch 4, **dadurch gekennzeichnet, daß** der Verschlußboden (14), das Verschlußgehäuse (13), die Positionierungsplatten (4), das Trennteil (15) und der Mantel (9) aus Kunststoff gefertigt sind.
